(19) **Europäisches Patentamt**

**European Patent Office**

**Office européen des brevets**

(11) Veröffentlichungsnummer : **0 124 003**
**B1**

(12) **EUROPÄISCHE PATENTSCHRIFT**

(45) Veröffentlichungstag der Patentschrift :
17.05.89

(21) Anmeldenummer : 84104280.7

(22) Anmeldetag : 16.04.84

(51) Int. Cl.⁴ : **B 29 C 45/00, B 29 C 45/50,
B 29 B 7/90**

(54) Verfahren und Vorrichtung zum Herstellen eines Formteils aus Kunststoff mit festen Einlagen.

(30) Priorität : 29.04.83 DE 3315707

(43) Veröffentlichungstag der Anmeldung :
07.11.84 Patentblatt 84/45

(45) Bekanntmachung des Hinweises auf die Patenterteilung : 17.05.89 Patentblatt 89/20

(84) Benannte Vertragsstaaten :
AT BE DE FR GB IT NL SE

(56) Entgegenhaltungen :
BE–A– 534 862
DE–B– 1 140 340
GB–A– 1 597 770
US–A– 3 317 959
KUNSTSTOFFBERATER, Band 27, Nr. 6, Juni 1982,
Seiten 19-23, Frankfurt/Main, DE; K.-M. HESS: "Füllen
und Verstärken von Thermoplasten zur Herstellung
technischer Kunststoffe"

(73) Patentinhaber : BAYER AG
Konzernverwaltung RP Patentabteilung
D-5090 Leverkusen 1 Bayerwerk (DE)

(72) Erfinder : Fahner, Karsten, Dipl.-Ing.
Semmelweisstrasse 16
D-5000 Köln 71 (DE)
Erfinder : Johannaber, Friedrich, Dr.
Südstrasse 26
D-5204 Lohmar (DE)
Erfinder : Depcik, Hans-Werner, Dipl.-Ing.
Vennstrasse 124 A
D-4000 Düsseldorf 22 (DE)
Erfinder : Kaminski, Axel, Dipl.-Ing.
Markusmühle 2
D-5632 Wermelskirchen 2 (DE)
Erfinder : Van Hooren, Rüdiger
Uerdinger Strasse 740
D-4150 Krefeld (DE)

**Beschreibung**

Die Erfindung betrifft ein Verfahren und eine Vorrichtung zum Herstellen eines Formteils aus Kunststoff mit festen Einlagen aus faser-, faden-, band- und/oder flächenartigen Stoffen, indem einer Schneckenmaschine im Bereich des plastifizierten Kunststoffes unter etwa gleichem Druck besagte Stoffe zugesetzt und unter Scherung eingemischt werden.

Durch den Einbau von festen Einlagen insbesondere Glasfasern, können die Festigkeitseigenschaften von Kunststoff-Produkten wesentlich verbessert werden, wodurch sie vielseitiger einsetzbar sind. Wenn darüber hinaus diese Stoffe — beispielsweise aus Metall — noch leitend sind, so kann zusätzlich eine elektromagnetische Abschirmung erzielt werden, so daß solche Formteile bei empfindlichen elektronischen Anlagen neben dem meist erforderlichen Schutz durch Kapselung gleichzeitig eine Abschirmung gegen Störeinflüsse der Umwelt übernehmen können.

Bekannt ist ein Verfahren, bei dem in einer Spritzgieß-Maschine üblicher Bauart am hinteren Aufgabetrichter getrennt Kunststoff-Granulat und Einlagen zur Herstellung eines verstärkten Kunststoffteils eingegeben werden (US-A-4 300 840).

Der Nachteil dieses Verfahrens besteht darin, daß die im allgemeinen spröden Einlagen einen wirtschaftlich nicht mehr tragbaren Verschleiß an den beaufschlagten Teilen der Maschine hervorrufen, der gleichzeitig zur weitgehenden Zerkleinerung der Einlagen führt, wodurch trotz Zugabe langer Glasfasern im fertigen Kunststoffteil letzlich nur Einlagen-Längen in Mittel kleiner 0,5 mm vorhanden sind. Wegen dieser Nachteile wird das Verfahren in der Praxis kaum noch eingesetzt.

Weiter sind Extruder mit kontinuierlicher Schneckenförderung bekannt, bei dem in einem überdruckfreien Bereich der Kunststoffschmelze Glasfasern zugegeben werden, um dann nach dem Einmischen einen Strang zu extrudieren, der in Längen von maximal 6 mm zu Granulat geschnitten wird (« Kunststoffe » 1959, Heft 10, Seite 543-546, insbesondere Abb. 7 und zugehöriger Text S. 546, rechte Spalte).

Bei diesem Extruder-Verfahren wird zwar ein Verstopfen und ein hoher Verschleiß vermieden. Da aber zur Fertigung einzelner Formteile das Granulat erneut in einer Spritzgieß-Maschine aufgeschmolzen werden muß, treten die bereits genannten Nachteile trotzdem auf. Die fertigen Formteile enthalten nur noch Faserschutt mit einer mittleren Länge von 0,1 bis 0,5 mm bei geringen Anteilen von 1 bis 2 mm. Die damit zu erzielende Verbesserung der Festigkeit, auch wenn in der Praxis Einlagen in Mengen bis zu 50 % zugesetzt werden, ist gering. Gleichzeitig nimmt die Oberflächenqualität entgegengesetzt zur Menge ab, so daß gegebenenfalls weitere teure Maßnahmen, z. B. Sekundärbeschichtungen, erforderlich sind. Auch ausreichende elektromagnetische Abschirmungen werden bei diesen kleinen Abmessungen erst bei Zusätzen von 40 % und mehr an leitfähigen Stoffen erreicht, was neben der schlechteren Verarbeitbarkeit und erhöhten Stoffkosten zu erheblichen Oberflächenproblemen führen kann.

Aufgabe der Erfindung ist es, ein Verfahren und eine Vorrichtung zur wirtschaftlichen Herstellung der eingangs erwähnten Formteile zu finden, wobei schon durch geringe Mengen an festen Einlagen eine höhere Festigkeit, insbesondere gegen Splitterbruch, und erforderlichenfalls ein hohes elektromagnetisches Abschirmvermögen erzielt werden.

Die Aufgabe wird dadurch gelöst, daß die Abscherung der Stoffe zu Einlagen einer gewünschten Mindestabmessung von über 4 mm, insbesondere über 8 mm, und die Einmischung in den Kunststoff mittels kolbenartiger Bewegung der Schnecke unterstützt wird, und daß der mit Einlagen verstärkte Kunststoff dann mit Hilfe eines Kolbens in ein geschlossenes Werkzeug eingespritzt wird.

Für den Fachmann ist es überraschend, daß es bei einer Spritzgießmaschine mit hin- und hergehender Schnecke und engem Spalt zwischen Gehause und der kolbenartig ausgebildeten Schneckenspitze möglich ist, einerseits trotz der taktweisen Arbeitsweise ein Verwirren der langen Einlagen untereinander bzw. ein Festklemmen zwischen Schnecke sowie Gehäusewandung zu vermeiden, und andererseits die Einlagen so schonend zu behandeln, daß schließlich bei fertigen Formteilen ein großer Teil (> 30 %) der Einlagen Längen zwischen 4-40, insbesondere zwischen 10-30 mm, besitzt. Dabei können als Einlagen sowohl durchgehende Fäden, Rovings, Bänder, Netzwerke, als auch einzelne Fasern, Späne, Plättchen eingesetzt werden. Als weiterer Vorteil hat sich bei dem erfindungsgemäßen Verfahren herausgestellt, daß die Einlagen, insbesondere wegen der durch die größere Länge bedingte geringere Anzahl von Enden, nur einen geringen Verschleiß hervorrufen. Auch sorgt die kolbenartige Bewegung der Schnecke für eine gute Verteilung der Einlagen, so daß die späteren Formteile nahezu isotropisches Verhalten besitzen. Hierzu kommt noch der Vorteil, daß beim fertigen Formteil die speziellen Eigenschaften der Einlagen hinsichtlich Festigkeit und gegebenenfalls Abschirmung über eine größere Länge genutzt werden. Auch weist das Formteil wegen der geringeren Anzahl von Einlagenenden eine verbesserte Oberflächenqualität auf.

In einer besonderen Durchführung des Verfahrens werden die beim Arbeitsprozeß anfallenden Gase durch Druckaufbau mittels pfropfenartigen Aufbaues des Kunststoffes im Bereich der Schneckenspitze nach rückwärts maximal bis zur Zuführung der Einlagen und dann nach außen abgeführt.

Durch Ausbildung eines Kunststoffpfropfens in der Schneckenmaschine ist es möglich, evtl.

entstandene Gase aus dem geschmolzenen Kunststoff entgegengesetzt zur Förderrichtung über teilgefüllte Schneckengänge durch eine Öffnung, die mit der Öffnung für die Zufuhreinrichtung der Einlagen identisch sein kann, abzuziehen. Ein so hergestelltes Formteil hat dadurch wesentlich weniger Blasen als beispielsweise ein extrudiertes Produkt.

In einer weiteren Durchführung des Verfahrens wird ein Teil der Schmelze bei der kolbenartigen Bewegung durch einen Spalt zwischen der mit einem Kolben versehenen Schneckenspitze und einem Gehäuse bewegt.

Im Gegensatz zur üblichen Spritzgießmaschine, bei der ein Rückfluß durch die Rückstromsperre möglichst vermieden wird, werden hier die durch den Rückfluß entstehenden Scherkräfte im Spalt zum Teilen der Einlagen in bestimmte Längen genutzt, wobei gleichzeitig neben der verbesserten Mischwirkung eine Ausrichtung der Einlagen erfolgen kann, was bei erwünschten statischen Vorzugsrichtungen der Formteile von Vorteil ist.

Gemäß einer anderen Durchführungsform des Verfahrens wird die kolbenartige Bewegung in Hauptförderrichtung des Kunststoffes gleichzeitig zum Spritzen verwendet.

Beim Spritzgießen oder Spritzblasen kann das erfindungsgemäße Verfahren vorteilhaft mit einer Schnecke ausgeführt werden.

Spritzgießmaschinen mit ausstoßkolbenartiger Schnecke sind aus DE-B1-1 140 340 bekannt.

Die Vorrichtung zum Herstellen eines Formteils aus Kunststoff mit festen Einlagen aus faser-, faden-, band- und/oder flächenartigen Stoffen geht aus von einem Gehäuse mit Aufgabetrichter, Zuführung und einer Schnecke mit axialem Bewegungsantrieb, wobei die Schnecke mit einer Pfropfenbildung bewirkenden Schneckenspitze ausgerüstet ist und — in Förderrichtung gesehen — vor oder im Bereich einer Zuführung eine Entlüftungsöffnung vorgesehen ist.

Das Neue ist darin zu sehen, daß der Bewegungsantrieb nicht nur zum Ausstoßen sondern auch während des Einmischens betätigbar ist.

Durch den Bewegungsantrieb ist es möglich, die Schnecke in axialer Richtung zu bewegen und so den Scher- und Mischprozeß zu steuern. Gleichzeitig wird durch eine die Pfropfenbildung bewirkende Schneckenspitze ein nach rückwärts abfallender Druckaufbau erzeugt, der bei teilweiser Füllung der Schneckengänge für die Ableitung der dort entstehenden Gase durch die Entlüftungsöffnung sorgt, wobei im allgemeinen diese gleichzeitig als Zuführung für den die Einlagen bildenden Stoff genutzt wird.

Vorzugsweise ist ein Teil der Schneckenspitze als Kolben ausgebildet.

Durch die Ausbildung der Schneckenspitze als einfacher Kolben ist es möglich, diese gleichzeitig beispielsweise zum Spritzgießen oder Spritzblasen zu verwenden. Dabei hat es sich als zweckmäßig herausgestellt, keine Rückstromsperre einzubauen, da die Verstopfungsgefahr und der Verschleiß zu groß sind.

Gemäß einer weiteren möglichen Ausführungsform steuert der Bewegungsantrieb die Zuführung.

Um örtliche Konzentrationen der Einlagen in der Schmelze infolge des taktweisen Arbeitens zu vermeiden, kann eine mit dem Bewegungsantrieb gekoppelte Sperre die Zufuhr des die Einlagen bildenden Stoffes unterbrechen. Gleichzeitig ist auch denkbar, daß damit auch eine Erwärmung der Einlagen zur Vermeidung eines Schocks oder deren Benetzung durch Additive gesteuert wird.

Vorzugsweise sollten mehr als 30 Gew.-% der Einlagen mindestens eine Abmessung größer als 4 mm, insbesondere großer als 8 mm, besitzen.

Gerade durch lange Einlagen, auch bei sehr komplizierter Geometrie der Formteile, kann die Festigkeit um 30-100 % verbessert werden. Als gut geeignet haben sich Längen von 4-40 mm, insbesondere von 10-30 mm, herausgestellt, wobei infolge vielsartiger Struktur jeweils die Kräfte innerhalb der Einlagen von einem Einlagenende bis zum anderen übertragen werden. Der Anteil der Einlagen kann dabei 2-70 Gew.-%, insbesondere 5-20 Gew.-%, des Gesamtgewichtes ausmachen. Es liegt eine günstigere Oberfläche des Formteils vor, weil die Anzahl der Enden bei längeren Einlagen geringer und gleichzeitig wegen besserer Eigenschaften die einzubauende Menge an Einlagen kleiner ist.

Durch die entsprechende Wahl des Werkstoffes der Einlagen kann das spätere Festigkeitsverhalten stark beeinflußt werden. Geeignet sind organische und/oder anorganische Stoffe, wie beispielsweise Kohlenstoff, Aramid, Asbest, Metalle, Glas und andere Mineralfasern, die unter anderem in Thermoplaste, Elastomere sowie Harze eingebettet werden können.

In einer erwähnenswerten Ausführungsform sind die Einlagen mindestens teilweise elektrisch leitfähig.

Bei Einsatz von langen leitfähigen Fasern und/oder flächenartigen Gebilden (Oberfläche $\geqslant 36$ mm$^2$), beispielsweise aus Aluminium, ist schon bei Konzentrationen mit weniger als 1/6 der bisher üblichen Einlagen die geforderte elektrische Abschirmung zu erzielen. Auch eine elektromagnetische Abschirmung in niederfrequentem Bereich < 30 MHz ist bei Einsatz von hochpermeablen Stoffen möglich.

Durch ein Netzwerk aus langen, untereinander verbundenen Metallfasern entsteht innerhalb des isolierenden Kunststoffes ein elektrischer Widerstand, der beispielsweise zur Heizung eingesetzt werden kann.

In einer denkbaren Ausführungsform dienen die Einlagen als Träger weiterer Additive.

Durch die Additive aus Pigmenten, Farbstoffen, Stabilisatoren und Schutzstoffen können beispielsweise gewisse Farbeffekte bzw. Schutzfunktionen im Formteil zusätzlich erzielt werden.

## Beispiel 1

Vergleichsweise werden Zündkappenverteiler mit einer mittleren Wandstärke von 2 mm aus Polyamid 66, die einmal nach dem bekannten Verfahren aus Granulat mit eingebauten leitfähigen Einlagen und einmal nach dem erfindungsgemäßen Verfahren aus reinem Granulat und metallenen Rovings hergestellt wurden, untersucht.

Das Ergebnis ist in der Tabelle niedergeschrieben, wobei die elektromagnetische Abschirmung (EMA) bei einer Meßfrequenz von 2,5 GHz (Messung der elektrischen Feldkomponente) gemessen wurde.

| EMA (dB) | Füllstoffkonzentration | |
|---|---|---|
| | bekanntes Verfahren (%) | Erfindung (%) |
| 0 | 25,0 | 2,5 |
| 5 | 27,5 | 3,0 |
| 10 | 30,0 | 3,5 |
| 15 | 32,5 | 4,0 |
| 20 | 35,0 | 4,5 |
| 25 | 37,5 | 5,0 |
| 30 | 40,0 | 5,5 |
| 35 | 42,5 | 6,0 |
| 40 | 45,0 | 6,5 |
| 45 | 47,5 | 7,0 |
| 50 | 50,0 | 7,5 |

Ein Vergleich der Werte zeigt, daß eine ausreichende Abschirmung von 40 dB schon bei dem erfindungsgemäßen Verfahren mit etwa 6,5 % Füllstoffkonzentration erreicht wird, während das herkömmliche Verfahren einen 7 mal so hohen Wert, nämlich 45,0 % erfordert.

Grundsätzlich weist das mechanische Verhalten eine ähnliche Konstellation auf. Zum Beispiel fällt die Kerbschlagzähigkeit beim herkömmlichen Verfahren von ca. 30 kJ/m$^2$ bei 40 Gew.-% Füllstoffen auf ca. 5 kJ/m$^2$ ab, während bei dem erfindungsgemäßen Verfahren sogar ein leichter Anstieg zu verzeichnen ist.

## Beispiel 2

Ein Spritzgießteil aus Polycarbonat mit 20 Glasfaseranteilen und 4 mm Stärke ergibt folgende Werte :

| | verstärktes Granulat | | Granulat + Rovings | |
|---|---|---|---|---|
| | Längs | Quer | Längs | Quer |
| Zugfestigkeit (MPa) | 82 | 59 | 95 | 82 |
| E-Modul (GPa) | 5 | 3,9 | 5,9 | 4,8 |
| Biegefestigkeit (MPa) | 149 | 122 | 192 | 163 |
| Durchstoß (J) | 9,39 | 10,3 | 19,5 | 18,3 |

4

. Ein Vergleich der mechanischen Werte zeigt, daß Steifigkeit und Bruchfestigkeiten bei nach dem erfindungsgemäßen Verfahren hergestellten Formteilen deutlich höher und richtungsunabhängiger sind.

Insbesondere fällt die Festigkeit einer doppelt so hohen Energieaufnahme bei stoßartiger Belastung auf.

## Beispiel 3

Bei der Herstellung von Heizeinrichtungen über den Spritzgießprozeß nach diesem neuen Verfahren wurde als Polymermatrix Durethan® (Polyamid der Bayer AG Leverkusen, Bundesrepublik Deutschland) (PA 66) eingesetzt. Die leitfähige innere Verstärkung besteht aus 12 Gew.-% Stahlfasern von 6,5 μ. Bei einer angelegten Spannung von 30 V und einem Strom von 0,5 A ($P = U \times J = 30\ V \times 0,5\ A = 15\ W$) stellt sich eine Oberflächentemperatur von 70 °C ein.

## Patentansprüche

1. Verfahren zum Herstellen eines Formteiles aus Kunststoff mit festen Einlagen aus faser-, faden-, band- und/oder flächenartigen Stoffen, indem einer Schneckenmaschine im Bereich des plastifizierten Kunststoffes unter etwa gleichem Druck besagte Stoffe zugesetzt und unter Scherung eingemischt werden, dadurch gekennzeichnet, daß die Abscherung der Stoffe zu Einlagen einer gewünschten Mindestabmessung von über 4 mm, insbesondere über 8 mm, und die Einmischung in den Kunststoff mittels kolbenartiger Bewegung der Schnecke unterstützt wird, und daß der mit Einlagen verstärkte Kunststoff dann mit Hilfe eines Kolbens in ein geschlossenes Werkzeug eingespritzt wird.

2. Verfahren nach Anspruch 1, dadurch gekennzeichnet, daß die beim Arbeitsprozeß anfallenden Gase durch den Druckaufbau mittels pfropfenartigen Aufbaues des Kunststoffes im Bereich der Schneckenspitze nach rückwärts maximal bis zur Zuführung der Einlagen und dann nach außen abgeführt werden.

3. Verfahren nach Anspruch 1 oder 2, dadurch gekennzeichnet, daß ein Teil der Schmelze bei der kolbenartigen Bewegung durch einen Spalt zwischen der mit einem Kolben versehenen Schneckenspitze und einem Gehäuse bewegt wird.

4. Verfahren nach Anspruch 1, 2 oder 3, dadurch gekennzeichnet, daß die kolbenartige Bewegung in Hauptförderrichtung des Kunststoffes gleichzeitig zum Spritzen verwendet wird.

5. Vorrichtung zum Herstellen von Formteilen mit festen Einlagen, bestehend aus einem Gehäuse mit Aufgabetrichter, Zuführung und einer Schnecke mit axialem Bewegungsantrieb, wobei die Schnecke mit einer Pfropfenbildung bewirkenden Schneckenspitze ausgerüstet ist, und — in Förderrichtung gesehen — vor oder im Bereich einer Zuführung eine Entlüftungsöffnung vorgesehen ist, dadurch gekennzeichnet, daß der Bewegungsantrieb nicht nur zum Ausstoßen sondern auch während des Einmischens betätigbar ist.

6. Vorrichtung nach Anspruch 5, dadurch gekennzeichnet, daß ein Teil der Schneckenspitze als Kolben ausgebildet ist.

7. Vorrichtung nach Ansprüchen 5-6, dadurch gekennzeichnet, daß der Bewegungsantrieb als Steuerung für die Zuführung ausgebildet ist.

## Claims

1. Process for producing a moulding made from plastic having solid incorporated elements made from fibrous, thread, tape and/or sheet like materials, in which the above mentioned materials are added to a screw injection molding machine in the region of the plasticised plastic under approximately the same pressure and are incorporated under shear, characterized in that a piston like movement of the screw is used to promote shearing-off of the materials to make incorporated elements having a desired minimum length greater than 4 mm, in particular greater than 8 mm, and also the incorporation into the plastic, and that the plastic material which is reinforced by incorporated elements is then injected into a closed mould using a piston.

2. Process according to Claim 1, characterized in that the gases which are produced in the operation, are driven backwards at most as far as the feed addition for the incorporated elements and are then led off externally, this being achieved by means of the pressure build up caused by a plug like formation of the plastic in the region of the screw tip.

3. Process according to Claim 1 or 2, characterized in that during the piston like movement, part of the melt is driven through a gap between the screw tip which is equipped with a piston, and a housing.

4. Process according to Claim 1, 2 or 3, characterized in that the piston like movement in the principal direction of transport of the plastic is simultaneously used for injection.

5. Device for producing mouldings having solid incorporated elements, comprising a housing having a feed hopper, feed addition and a screw having a drive for axial movement, where the screw is fitted with a screw tip which causes plug formation, and — in relation to the direction of transport — a degassing

# EP 0 124 003 B1

vent is provided upstream or in the region of a feed addition, characterized in that the drive for displacement is not only operable during discharge but also during mixing.

6. Device according to Claim 5, characterized in that a part of the screw tip is formed as a piston.

7. Device according to Claims 5-6, characterized in that the drive for displacement is arranged to control the feed addition.


## Revendications

1. Procédé de production d'une pièce moulée en matière plastique comportant des garnitures solides de matières en fibres, fils, rubans et/ou corps plans, dans lequel lesdites garnitures sont introduites sous une pression sensiblement identique dans une machine à vis sans fin dans la zone de plastification de la matière et incorporées par mélange avec cisaillement, caractérisé en ce que le cisaillement des matières formant les garnitures est maintenu à une dimension minimale souhaitée supérieure à 4 mm, notamment supérieure à 8 mm, et l'incorporation dans la matière synthétique est facilitée par un mouvement de piston de la vis sans fin, et en ce que la matière plastique renforcée par les garnitures est ensuite injectée à l'aide d'un piston dans un moule fermé.

2. Procédé selon la revendication 1, caractérisé en ce que les gaz produits lors du processus opératoire sont évacués au maximum vers l'arrière jusqu'à l'amenée des garnitures, puis expulsés par élévation de la pression au moyen d'un bouchon de matière plastique dans la région de la pointe de la vis sans fin.

3. Procédé selon la revendication 1 ou 2, caractérisé en ce que le mouvement de piston déplace une partie de la masse fondue à travers une fente entre la pointe de la vis sans fin pourvue d'un piston et un boîtier.

4. Procédé selon la revendication 1, 2 ou 3, caractérisé en ce que le mouvement de piston dans la direction principale d'alimentation de la matière plastique est utilisé simultanément pour l'injection.

5. Dispositif pour la fabrication de pièces moulées comportant des garnitures solides, constitué par un boîtier comportant une trémie de chargement, une amenée, et par une vis sans fin à commande axiale de mouvement, la vis sans fin étant équipée d'une pointe de vis entraînant la formation d'un bouchon et — considéré dans la direction d'alimentation — une ouverture d'évacuation d'air étant prévue devant ou dans la zone d'amenée, caractérisé en ce que la commande de mouvement peut être actionnée non seulement pour l'injection, mais aussi pendant l'incorporation.

6. Dispositif selon la revendication 5, caractérisé en ce qu'une partie de la pointe de la vis sans fin est constituée comme un piston.

7. Dispositif selon les revendications 5-6, caractérisé en ce que la commande de mouvement est réalisée comme commande pour l'amenée.

6